# DEMANDE DE BREVET EUROPEEN

(11) **EP 2 244 074 A1**
(43) Date de publication de la demande: **27.10.2010**
(21) Numéro de dépôt: 10155368.3
(22) Date de dépôt: 03.03.2010
(51) Int. Cl.: G01F 1/24, G01P 13/00

(54) **Détecteur de débit de fluide amélioré**

(30) Priorité: 21.04.2009 FR 0952597
(71) Demandeur: Airindex, 37170 Chambray les Tours (FR)
(72) Inventeur: Da Silva Gomes, Philippe, 37200, TOURS (FR); Rochette, Vincent, 69480, ANSE (FR)
(74) Mandataire: Cabinet Plasseraud

(57) **Abrégé**

Détecteur de débit de fluide comprenant une canalisation (1) destinée à recevoir le fluide et un corps (3) mobile sous l'effet du fluide. Le corps mobile (3) présente une partie en matériau aimantable. Le détecteur comprend en outre un moyen de guidage (4) du corps (3) en translation parallèlement à un axe (2) de la canalisation (1), entre une position extrême amont (5) et une position extrême aval (6) par rapport au sens d'écoulement du fluide, un moyen de rappel apte à déplacer le corps dans le sens opposé à l'écoulement du fluide, et un moyen de détection (7) de la présence d'aimant. Le corps mobile (3) présente une surface latérale (19) le long de laquelle s'écoule le fluide. Une portion amont (22) de la canalisation (1) s'étend axialement au moins en regard du corps (3) en position extrême amont (5). La canalisation présente une restriction aval (23), située en aval de la portion amont (22), et en regard d'au moins une partie (24) de la surface latérale (19) du corps (2) lorsque ce dernier est en position extrême aval (6).

## Description

L'invention concerne le domaine des détecteurs de débit de fluides, notamment de fluides liquides et en particulier le domaine des détecteurs de débit pour installations sanitaires telles que des chaudières à serpentins.

La détection de débits est un organe de sécurité essentiel pour les chaudières à serpentins. En cas d'interruption ou de restriction excessive de la circulation du fluide dans le serpentin, les détecteurs de débit permettent de couper ou de réduire la quantité de chaleur apportée au serpentin. Cela évite l'explosion de la chaudière. Les détecteurs sont généralement associés à d'autres systèmes de sécurité utilisant des capteurs de pression ou de température du fluide.

Les installations sanitaires utilisent également des débitmètres à turbine, qui permettent de mesurer le débit du fluide. Ces débitmètres sont chers et ne conviennent pas pour équiper des chaudières à gaz domestiques, où la sécurité doit être assurée avec des composants bon marché.

Le domaine technique des détecteurs de débit est différent de celui des dispositifs de mesure de débit. Les détecteurs de débit, également appelés débistats, sont des composant simples fonctionnant en « tout ou rien ». Une grandeur de sortie change d'état lorsque le débit concerné franchit le seuil à détecter. A l'opposé, les dispositifs de mesure de débit, également appelés débitmètres ou capteurs de débit, présentent une grandeur de sortie variable en continu qui donne une image continue du débit mesuré.

Les documents EP 426 405 et FR 2 312 017 décrivent chacun un interrupteur actionné par l'écoulement d'un flux hydraulique. Un piston magnétique en position de repos obstrue quasiment la canalisation. Lorsqu'un débit apparaît, le piston se déplace et libère un canal d'écoulement. Ce type de détecteur est adapté pour détecter l'apparition d'un débit mais ne convient pas pour détecter le franchissement d'un seuil de débit.

Le document DE 91 09 854 décrit un capteur de débit. Le débit mesuré s'écoule par un interstice entre un flotteur magnétique et la canalisation. L'interstice augmente progressivement lorsque le flotteur le déplace. Le capteur de débit comprend un capteur de présence d'aimant dont la position est réglable, de sorte qu'un seuil de débit non nul peut être détecté.

Les détecteurs précités présentent l'inconvénient que, lorsque le débit fluctue autour de la valeur à laquelle le système de sécurité doit être enclenché, la position du flotteur fluctue également. L'enclenchement du détecteur et du système de sécurité se fait de manière instable. Cela provoque des arrêts et redémarrages successifs de l'équipement correspondant. Dans le cas de chaudières, cela provoque des à-coups indésirables dans la circulation d'eau. Autrement dit, les détecteurs précités ne conviennent pas pour commander directement des systèmes de sécurité.

Pour résoudre ce problème d'instabilité de l'enclenchement du détecteur, l'inventeur a déjà développé un détecteur de débit décrit dans le document EP 1 762 829. On fait évoluer un corps magnétique mobile non seulement dans une zone de détection du détecteur d'aimant, mais également dans une zone d'attirance mécanique entre le corps magnétique et le détecteur d'aimant. Un effort de plaquage crée un frottement mécanique sur le corps mobile, de sorte que le débit d'enclenchement est différent du débit de désenclenchement du détecteur. Le déplacement du corps mobile magnétique en fonction du débit présente un phénomène d'hystérésis. Un inconvénient de ce type de détecteur est qu'il est difficile d'ajuster séparément le débit d'enclenchement et le débit de désenclenchement à des valeurs souhaitées.

L'invention propose un détecteur qui remédie aux inconvénients précités et notamment qui permet un ajustement simplifié de la différence entre le débit d'enclenchement et celui de désenclenchement.

Selon un mode de réalisation, le détecteur de débit de fluide comprend une canalisation destinée à recevoir le fluide, et un corps mobile sous l'effet du fluide. Le corps présente une partie en matériau aimantable. Le détecteur comprend en outre un moyen de guidage du corps en translation parallèlement à un axe de la canalisation, entre une position extrême amont et une position extrême aval par rapport au sens d'écoulement du fluide, un moyen de rappel apte à déplacer le corps dans le sens opposé à l'écoulement du fluide, et un moyen de détection de la présence d'aimant. Le corps mobile présente une surface latérale le long de laquelle s'écoule le fluide. Une portion amont de la canalisation s'étend axialement au moins en regard du corps en position extrême amont. La canalisation présente une restriction aval, située en aval de la portion amont, et en regard d'au moins une partie de la surface latérale du corps lorsque ce dernier est en position extrême aval.

On entend par « restriction aval », une portion de la canalisation dont la surface de la section droite est inférieure à celle de la portion amont.

On entend par « une portion amont s'étend axialement au moins en regard du corps en position extrême amont » le fait que la portion de la canalisation appelée « portion amont » est délimitée axialement comme comprenant au moins la portion de la canalisation qui est en vis-à-vis latéralement (c'est-à-dire selon une direction perpendiculaire à l'axe) du corps lorsque ce dernier est dans ladite position extrême amont. Autrement dit, la portion appelée « portion amont » comprend au moins la portion de la canalisation qui s'étend sur une même zone axiale que la zone axiale occupée par le corps lorsque celui-ci est dans ladite « position extrême amont ».

On entend de même par « une restriction... située en regard d'au moins une portion de la surface latérale du corps lorsque ce dernier est en position extrême aval » le fait est que ladite restriction est en vis-à-vis perpendiculairement à l'axe de la canalisation de la partie de la surface latérale. On comprendra également que la restriction s'étend sur une même zone axiale que la zone axiale occupée par une partie de la surface latérale du corps lorsque celui-ci est dans la position extrême aval. Autrement dit, le corps en position extrême aval pénètre, au moins en partie, dans la restriction aval.

Lorsque le corps est en position extrême amont, le fluide s'écoule par l'interstice compris entre la surface latérale du corps mobile et la portion amont de la canalisation. Lorsque le corps est en position extrême aval, le fluide s'écoule entre la même surface latérale et la restriction de la canalisation. Autrement dit, lorsque le corps mobile arrive en position extrême aval, une perte de charge supplémentaire pousse le corps mobile à rester dans la position extrême aval.

Le phénomène ci-dessus a lieu quelle que soit la position du détecteur d'aimant. Si le détecteur d'aimant est plus proche de la position extrême aval que de la position extrême amont, le détecteur sera actionné, en débit croissant, dès que le débit est au dessus du débit d'enclenchement et, en débit décroissant, tant que le débit est supérieur au débit de désenclenchement. Si le détecteur d'aimant est plus proche de la position extrême amont, celui-ci sera actionné lorsque le débit auquel est soumis le détecteur est inférieur aux limites ci-dessus.

L'inventeur s'est rendu compte qu'un besoin nouveau apparaît pour les applications de détecteurs de débit de fluides destinés à des systèmes de sécurité d'équipements grand public. Il faut pouvoir garantir, malgré les fluctuations dimensionnelles inhérentes à des composants de grande série bon marché, que le débit d'enclenchement de tous les détecteurs de la série soit inférieur à un plafond donné, que les débits de désenclenchement soient supérieurs à un seuil et que, pour chaque détecteur de la série, la différence entre les débits d'enclenchement et de désenclenchement soit au moins égale à un seuil d'hystérésis nécessaire à la stabilité du système de sécurité.

Le mode de réalisation précité permet de régler simplement le niveau d'hystérésis du détecteur. La restriction aval n'a aucune incidence sur le débit d'enclenchement. Ce dernier n'est dû qu'à la configuration de la canalisation et du corps mobile en position extrême amont. Autrement dit, la différence entre le débit d'enclenchement et le débit de désenclenchement est directement ajustable en modifiant la restriction de la canalisation, et ceci de manière indépendante de l'ajustement du débit d'enclenchement.

Selon un mode de réalisation, le détecteur comprend une butée mécanique amont, fixe par rapport à la canalisation et définissant la position extrême amont du corps mobile. Le corps mobile présente une surface de poussée faisant saillie radialement au-delà de la butée mécanique amont de manière à être poussée par le fluide. Une manière simple de régler le débit d'enclenchement du détecteur est de modifier ladite surface de poussée.

Avantageusement, le moyen de guidage comprend un premier élément de guidage fixe par rapport à la canalisation et un deuxième élément de guidage intégré au corps mobile. L'un des éléments de guidage est un doigt de guidage, parallèle à l'axe de la canalisation. L'autre élément de guidage est un alésage ajusté au doigt de guidage.

Avantageusement, la butée mécanique amont et le doigt de guidage forment un ensemble monobloc en matériau synthétique moulable.

Avantageusement, la butée mécanique comprend une semelle annulaire emmanchée dans la canalisation et une lame de raccordement orientée de manière que son épaisseur la plus fine soit transversale à l'axe de la canalisation. La lame s'étend radialement depuis la semelle jusqu'au doigt de guidage ou jusqu'à une base cylindrique et coaxiale au doigt de guidage. L'ajustement des dimensions de la lame de raccordement et/ou de l'éventuelle base cylindrique permet de modifier la surface de poussée du corps sans changer de corps mobile.

Avantageusement, la restriction aval est circulaire et coaxiale au doigt.

Selon une variante, le doigt de guidage est déporté latéralement par rapport au centre de la portion amont.

Avantageusement, le corps mobile est un bloc de ferrite brute.

Avantageusement, la surface latérale du corps mobile est cylindrique.

Avantageusement, le moyen de rappel, soit est constitué par le poids du corps, le dispositif étant de préférence disposé verticalement, soit comprend un ressort élastique.

Selon un autre aspect, l'invention porte également sur un procédé d'ajustement de l'hystérésis d'un détecteur de débit. Pour un bloc mobile, un moyen de rappel et une butée amont donnés, on modifie la restriction aval de la canalisation en fonction de la différence souhaitée entre un débit d'enclenchement et un débit de désenclenchement du détecteur.

Avantageusement, pour un bloc mobile et un moyen de rappel donnés, on modifie la dimension radiale de la butée mécanique amont en fonction du débit d'enclenchement souhaité.

D'autres caractéristiques et avantages de l'invention apparaîtront à la lecture de la description détaillée de quelques modes de réalisation pris à titre d'exemples non limitatifs et illustrés par les dessins annexés selon lesquels :
- la figure 1 est une coupe longitudinale du détecteur de débit ; et,
- la figure 2 est une coupe transversale du même détecteur selon le plan II-II de la figure 1.

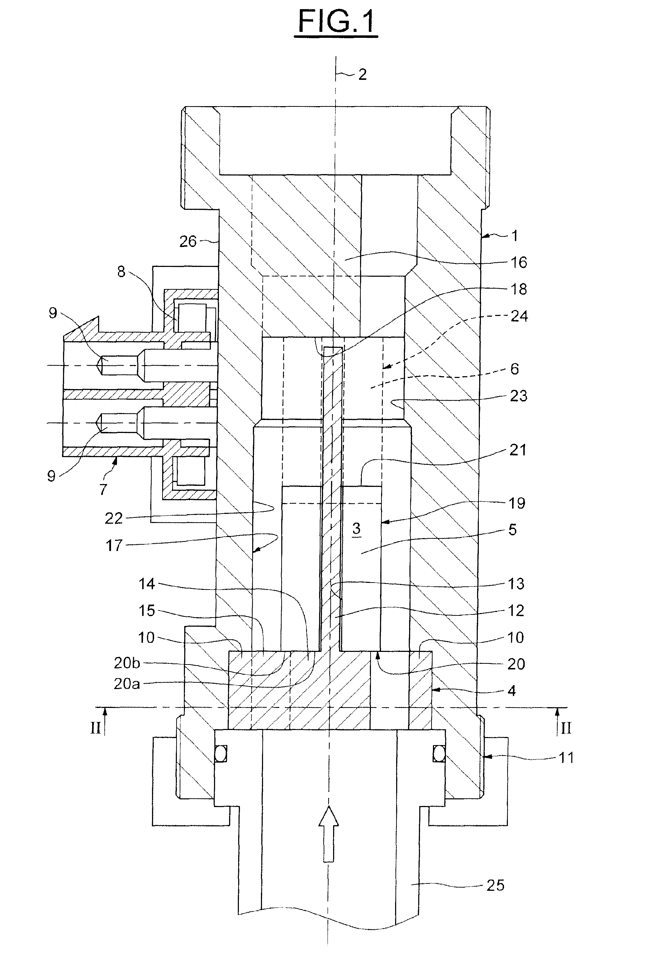

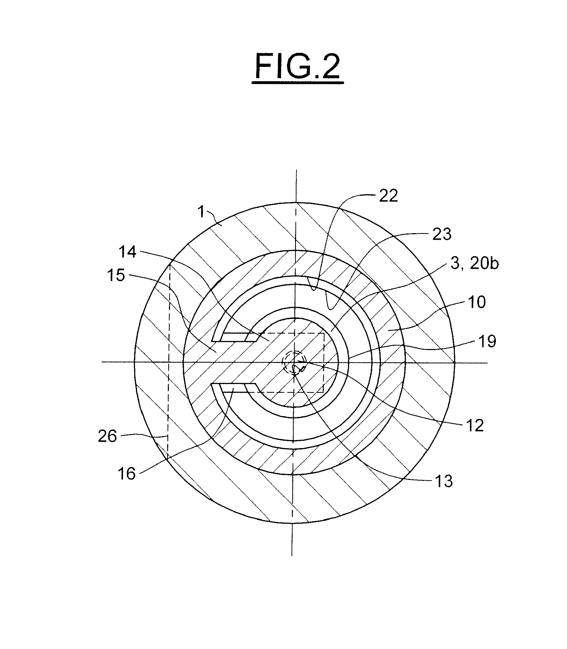

Comme illustré aux figures 1 et 2, le détecteur comprend une canalisation 1 creuse et allongée le long d'un axe 2 de la canalisation 1, un corps mobile 3 et un ensemble monobloc 4 servant de moyen de guidage au corps mobile 3 dans la canalisation 1. Le corps mobile 3 présente une position extrême amont 5 illustrée en trait plein sur la figure, et une position extrême aval 6 illustrée en pointillés sur la figure 1. Le dispositif comprend également un moyen de détection de la présence d'aimant 7.

Le corps mobile 3 est un bloc en ferrite pure sensiblement cylindrique. Le corps mobile 3 est délimité par une surface latérale 19 cylindrique, par un flanc radial amont 20 et par un flanc radial aval 21. Le corps mobile 3 présente un alésage 13 coaxial à la surface latérale 19.

Le fluide est amené dans la canalisation 1 par un conduit 25 raccordé à une extrémité amont 11 de la canalisation 1.

L'ensemble monobloc de guidage 4 comprend une semelle annulaire 10 emmanchée dans un lamage situé à l'extrémité amont 11 de la canalisation 1. Le diamètre intérieur de la semelle annulaire 10 est sensiblement dans le prolongement d'une surface périphérique intérieure 17 de la canalisation 1. L'ensemble monobloc 4 comprend également un doigt de guidage 12 sensiblement cylindrique et traversant l'alésage 13 du corps mobile 3. L'ensemble monobloc 4 comprend aussi une base 14 sensiblement cylindrique coaxiale au doigt 12 et s'étendant radialement au pied du doigt de guidage 12 de manière à obstruer l'espace entre le doigt de guidage 12 et l'alésage 13 lorsque le corps mobile 3 est en position extrême amont 5. La base 14 est reliée à la semelle annulaire 10 par une lame de raccordement 15. L'épaisseur de la lame 15 dans un plan radial de la figure 2 est plus fine que la hauteur axiale de la lame 15 visible en figure 1. La base 14 sert de butée mécanique amont recevant en appui le flanc radial amont 20.

Dans une variante, la lame 15 s'étend radialement jusqu'au doigt de guidage 12 et sert de butée mécanique amont au corps mobile 3. La butée mécanique amont (base 14 et/ou lame 15) définit axialement la position extrême amont 5.

Une nervure aval 16 s'étend radialement depuis la surface périphérique intérieure 17 de la canalisation 1 jusqu'à une extrémité intérieure de la nervure 16 située en regard du doigt de guidage 12. Un flanc radial 18 de la nervure aval 16 sert de butée mécanique aval au corps mobile 3 et définit la position extrême aval 6. Le flanc radial aval 21 du corps mobile 3 est en appui sur le flanc radial 18 de la nervure aval 16 lorsque le corps mobile 3 est en position extrême aval 6. L'épaisseur de la nervure 16 dans le plan radial de la figure 2 et l'extrémité intérieure de ladite nervure 16 sont telles que l'alésage 13 du corps mobile 3 en position extrême aval 6 est obstrué par le flanc radial 18.

La surface périphérique interne 17 de la canalisation 1 présente une portion amont 22 s'étendant axialement depuis la semelle annulaire 10 jusqu'au-delà du flanc radial aval 21 du corps mobile 3 lorsque le corps mobile 3 est en position extrême amont 5. La surface périphérique interne 17 comprend également une restriction 23 de diamètre plus réduit que celui de la portion amont 22. La restriction 23 s'étend axialement en aval de la portion amont 22 jusqu'au flanc radial 18 de la nervure aval 16. Lorsque le corps mobile 3 est en position extrême aval 6, la surface latérale 19 du corps mobile 3 présente une partie 24 en regard de la restriction 23. Autrement dit, la transition entre la portion amont 22 de plus grand diamètre et la restriction 23 de diamètre plus restreint se situe axialement entre le flanc radial aval 21 du corps mobile 3 en position extrême amont 5, et le flanc radial 18 de la nervure aval 16.

Le moyen de détection de la présence d'aimant 7 est constitué par un interrupteur à lame souple 8 raccordé à deux broches de connexion 9. L'interrupteur à lame souple 8 est situé plus près de la position extrême aval 6 du corps mobile 3 que de la position extrême amont 5. La distance radiale de l'interrupteur à lame souple 8 par rapport au bloc mobile 3, la sensibilité de l'interrupteur à lame souple 8, et l'intensité du magnétisme créé par le corps mobile 3, sont ajustées de manière que l'interrupteur à lame souple 8 soit ouvert lorsque le corps mobile 3 est en position extrême amont 5, et soit fermé lorsque le corps mobile est en position extrême aval 6.

De préférence, le moyen de détection de présence d'aimant 7 est disposé sur un méplat 26 de la surface extérieure de la canalisation 1 de manière que la distance radiale de l'interrupteur à lame souple 8 par rapport au corps mobile 3 soit réduite. L'interrupteur à lame souple 8 est situé axialement en aval du corps mobile 3. Ainsi, en passant de la position extrême amont 5 à la position extrême aval 6, la distance moyenne du corps mobile 3 à l'interrupteur à lame souple est réduite d'au moins 30%.

On va maintenant décrire l'écoulement du fluide à l'intérieur du détecteur. Le fluide en provenance du conduit 25 contourne la base 14 et la lame 15 puis rencontre le flanc radial amont 20 du corps mobile 3. Le fluide s'écoule ensuite entre la surface latérale 19 du corps mobile 3 en position extrême amont 5 et la portion amont 22 de la canalisation 1. Le diamètre de la surface latérale 19 du corps mobile 3 est supérieur au diamètre extérieur de la base 14. Le flanc radial amont 20 du corps mobile 3 s'étend radialement au-delà de la butée mécanique amont, c'est-à-dire au-delà de la base 14. Autrement dit, le flanc radial amont 20 comprend une surface d'appui 20a sur la base 14 et une surface de poussée 20b directement exposée au fluide.

La canalisation 1 est disposée verticalement de manière que le poids ramène le corps mobile 3 dans sa position extrême amont 5. Lorsque le débit de fluide dans le conduit 25 est tel que la poussée sur la surface de poussée 20b est supérieure au poids du corps mobile 3. Le débit d'enclenchement du dispositif correspond au débit du fluide ayant provoqué le décollement du corps mobile 3 depuis sa position extrême amont 5. Dès que le corps mobile 4 a quitté la position extrême amont 5, celui-ci est entraîné de manière quasiment instantanée jusque dans sa position extrême aval 6. L'ensemble du flanc radial amont 20 est exposé à la poussée du fluide et non plus la seule surface de poussée 20b. Lorsque le corps mobile 3 arrive en position extrême aval 6, une perte de charge supplémentaire est introduite dans l'écoulement du flux en raison de la restriction 23.

Lorsque le débit de fluide reste égal ou supérieur au débit d'enclenchement, le corps mobile 3 reste en position extrême aval 6 de manière stable, car l'effet du fluide surpasse le poids de par l'effet de la restriction 23 et de par l'effet de l'exposition de la totalité du flanc radial amont 20 à la poussée du fluide.

Lorsque le débit du fluide décroît et devient inférieur à un débit dit « débit de désenclenchement », le corps mobile 3 quitte la position extrême aval 6 pour revenir en position extrême amont 5 sous l'effet du poids du corps mobile 3. Dès que la surface latérale 19 du corps mobile 3 n'est plus en regard de la restriction 23, l'effet de cette restriction disparaît de sorte que, pour tout débit inférieur ou égal au débit de désenclenchement, le corps mobile 3 reste stable à la position extrême amont 5. Autrement dit, la position axiale du corps mobile 3 présente un phénomène d'hystérésis par rapport au débit de fluide traversant la canalisation 1. Le débit d'enclenchement est supérieur strictement au débit de désenclenchement.

Un tel dispositif présente l'avantage de pouvoir régler de manière particulièrement simple le débit d'enclenchement et le débit de désenclenchement, de manière indépendante l'un de l'autre, et de pouvoir ainsi adapter la conception du dispositif au cahier des charges requis par l'utilisateur. L'ensemble monobloc 4 est tout d'abord déterminé en fonction du débit d'enclenchement requis. On ajuste le diamètre de la base 14 de manière que la surface de poussée 20b permette au fluide de compenser le poids du corps mobile 3 pour la valeur de débit d'enclenchement requise. Ensuite, l'ensemble monobloc 4 étant fixé, on ajuste le diamètre de la restriction 23 en fonction du niveau d'hystérésis requis, c'est-à-dire en fonction de la différence requise entre le débit de désenclenchement et le débit d'enclenchement.

Dans une variante non illustrée, le dispositif n'est pas disposé verticalement, et un ressort hélicoïdal disposé au dessus du corps mobile 3, joue le rôle d'un moyen de rappel s'opposant à l'effet du fluide sur le corps mobile 3.

Dans une autre variante, la section transversale de la surface périphérique intérieure 17 de la canalisation 1 peut être ovale. Le doigt de guidage 12 peut être disposé n'importe où à l'intérieur de la canalisation 1 dès lors que le doigt de guidage 12 est parallèle à l'axe 2 de la canalisation 1, et que la position du moyen de détection 7 de présence d'aimant permet de distinguer la position extrême amont 5 de la position extrême aval 6.

Dans une autre variante, le conduit 25 d'amené du fluide peut n'être pas concentrique ni avec l'axe de la canalisation 2, ni avec le doigt de guidage 12.

Le fait que la surface périphérique intérieure 17 de la canalisation 1 en regard du corps mobile 3 présente une restriction dans une zone hors de la position extrême amont 5 du corps mobile aimantable 3 et en regard d'au moins une partie 24 de la position extrême aval 6, permet d'introduire une cause supplémentaire d'hystérésis, permettant d'ajuster la valeur de celle-ci de manière indépendante de l'ajustement du débit d'enclenchement du détecteur.

## Revendications

1. Détecteur de débit de fluide comprenant une canalisation (1) destinée à recevoir le fluide et un corps (3) mobile sous l'effet du fluide, le corps mobile (3) présentant une partie en matériau aimantable ; le détecteur comprenant en outre un moyen de guidage (4) du corps en translation parallèlement à un axe (2) de la canalisation, entre une position extrême amont (5) et une position extrême aval (6) par rapport au sens d'écoulement du fluide, un moyen de rappel apte à déplacer le corps dans le sens opposé à l'écoulement du fluide, et un moyen de détection (7) de la présence d'aimant ; le corps mobile (3) présentant une surface latérale (19) le long de laquelle s'écoule le fluide ; une portion amont (22) de la canalisation (1) s'étendant axialement au moins en regard du corps (3) en position extrême amont (5), **caractérisé par le fait que** la canalisation (1) présente une restriction aval (23), située en aval de la portion amont (22), et en regard d'au moins une partie (24) de la surface latérale (19) du corps (3) lorsque ce dernier est en position extrême aval (6).

2. Détecteur selon la revendication 1, comprenant une butée mécanique amont (14, 15), fixe par rapport à la canalisation (1) et définissant la position extrême amont (5) du corps mobile (3) ; le corps mobile présentant une surface de poussée (20a) faisant saillie radialement au-delà de la butée mécanique amont (14, 15) de manière à être poussée par le fluide.

3. Détecteur selon la revendication 1 ou 2, dans lequel le moyen de guidage (4) comprend un premier élément de guidage fixe par rapport à la canalisation (1) et un deuxième élément de guidage intégré au corps mobile (3) ; l'un des éléments de guidage étant un doigt de guidage (12), parallèle à l'axe (2) de la canalisation (1), l'autre élément de guidage étant un alésage (13) ajusté au doigt de guidage (12).

4. Détecteur selon les revendications 2 et 3 prises dans leur ensemble, dans lequel la butée mécanique amont et le doigt de
guidage (12) forment un ensemble monobloc (4) en matériau synthétique moulable.

5. Détecteur selon la revendication 3 ou 4, dans lequel la butée mécanique comprend une semelle annulaire (10) emmanchée dans la canalisation (1) et une lame (15) de raccordement orientée de manière que son épaisseur la plus fine soit transversale à l'axe de la canalisation (1), la lame (15) s'étendant radialement depuis la semelle (10) jusqu'au doigt de guidage (12) ou jusqu'à une base (14) cylindrique et coaxiale au doigt de guidage (12).

6. Détecteur selon l'une des revendications 3 à 5, dans lequel la restriction aval (23) est circulaire et coaxiale au doigt (12).

7. Détecteur selon l'une des revendications 3 à 6, dans lequel le doigt de guidage (12) est déporté latéralement par rapport au centre de la portion amont (22).

8. Détecteur selon l'une des revendications précédentes, dans lequel le corps mobile (3) est un bloc de ferrite brute.

9. Détecteur selon l'une des revendications précédentes, dans lequel la surface latérale (19) du corps mobile est cylindrique.

10. Détecteur selon l'une des revendications précédentes dans lequel le moyen de rappel est constitué par le poids du corps.

11. Détecteur selon la revendication 10, dans lequel l'axe (2) de la canalisation est vertical.

12. Détecteur selon l'une des revendications 1 à 9, dans lequel le moyen de rappel comprend un ressort élastique.

13. Procédé d'ajustement de l'hystérésis d'un détecteur de débit selon l'une des revendications précédentes **caractérisé par le fait que**, pour un bloc mobile (3), un moyen de rappel et une butée amont (14) donnés, on modifie la restriction aval (23) de la canalisation (1) en fonction de la différence souhaitée entre un débit d'enclenchement et un débit de désenclenchement du détecteur.

14. Procédé selon la revendication 13, dans lequel, pour un bloc mobile (3) et un moyen de rappel donnés, on modifie la dimension radiale de la butée mécanique amont (14) en fonction du débit d'enclenchement souhaité.
